# EUROPEAN PATENT SPECIFICATION

(11) **EP 2 615 900 B1**
(45) Date of publication and mention of the grant of the patent: **15.03.2017**
(21) Application number: 11825533.0
(22) Date of filing: 13.09.2011
(51) Int. Cl.: A01B 13/14, A01B 13/08, A01B 15/02, A01B 23/02, A01B 17/00

(54) **HOLDER, CULTIVATOR MEANS AND AGRICULTURAL MACHINERY EQUIPPED WITH SUCH**
HALTER, KULTIVIERUNGSMITTEL UND DAMIT AUSGESTATTETE LANDWIRTSCHAFTLICHE MASCHINEN
SUPPORT, MOYENS FORMANT CULTIVATEUR ET MACHINE AGRICOLE QUI EN EST ÉQUIPÉE

(30) Priority: 13.09.2010 SE 1050948
(43) Date of publication of application: 24.07.2013
(73) Proprietor: Väderstad Holding AB, 590 21 Väderstad (SE)
(72) Inventor: KARLSSON, Johan, 590 76 Vreta Kloster (SE); NÅBO, Olle, 590 15 Boxholm (SE); TARLAND, Mikael, 590 17 Mantorp (SE)
(74) Representative: Øen, Petter
(86) International application number: PCT/SE2011/051104
(87) International publication number: WO 2012/036619

(56) References cited:
- EP-A1- 0 025 568
- DE-A1- 4 202 259
- FR-A- 579 995
- FR-A1- 2 448 842
- FR-A1- 2 533 406
- GB-A- 965 194
- GB-A- 1 013 858
- SU-A1- 386 096
- US-A- 838 411
- US-A- 1 635 605
- US-A- 3 503 456
- US-A- 4 050 521
- US-A- 5 427 183

## Description

### Technical Field

The present invention relates to agricultural machineries, and particularly to a cultivator for the processing of the soil and its mounted cultivator means, including its holder, formed as a soil processing implement.

### Background of the Invention

The background of the invention is seen in DE 4202259 (A01B17/00), which shows a plough having double points, the lower one of which is a slender share and the other one, which is separately mounted above the lower share, is formed as a heart share, which thereby is wider to loosen up the soil further. However, the working depth of these double points is defined by the depth assumed by the front point.

Prior art in this field is also seen in US 4,050,521, which shows a plough provided with a trailing cultivator point, which is rotatably suspended on the plough stand in such a way that a counterweight lifts up the cultivator point when the plough is lifted up. When the plough is brought down, a heel acts on the cultivator point so that the same is lowered against the action of the counterweight, wherein cultivator point engages the soil. However, this publication essentially shows a plough that turns a ridge, a trailing cultivator point loosening up the soil further. Thus, this publication does not show double cultivator points that both process the soil.

### The Object of the Invention

The object of the present invention is to provide an agricultural machinery having double cultivator means, a front means of which performs a conventional land processing while a rear means provides a deeper processing than the front means.

The object is furthermore to provide such a machinery, the cultivator means of which may be mounted in one and the same attachment on a holder of the machinery.

The object is furthermore to provide such cultivator means having such an attachment so that the mounting of the means does not depend on each other, i.e., that the means can be replaced and adapted independently of each other.

In addition, the object is to provide such an attachment so that both single-shared and invertible double-shared cultivator means can be used.

### Summary of the Invention

By the present invention, as the same is set forth in the independent claim, the above-mentioned objects are met, wherein the mentioned disadvantages have been eliminated. Suitable embodiments of the invention are defined in the dependent claims.

An advantage of the invention is to equip a cultivator holder with double cultivator means, each one with a single or double point in order to achieve a greater processing depth. A front means with its point is arranged to process the soil down to a normal working depth. There is also mounted a second rear means with its point behind the front means, which rear means processes the soil down to an increased working depth.

In doing so, the following advantages are achieved: Deep loosening can be provided down to a level that a conventional cultivator normally does not reach. Possibly, the invention can contribute to a lower traction force demand than if the corresponding deep loosening would be effected by a single cultivator means. By the present invention, it is also possible to combine different cultivator points in a front and a rear position in order to provide optimum work result and operating economy.

Further advantages are attained by the present invention: A common so-called standard tine can be used. The rear means is placed behind and below the front means. In connection with stone release, these so-called tandem means get essentially the same lift height as if a conventional means was equipped with a regular point. Both means including their points can be connected to the same attachment, thereby utilizing the same fastening elements. The front means can be a common cultivator point or a so-called Low Disturbance point. The front means also serves the purpose of protecting the rear holder from wear. The rear means can have a geometry deviating from the front means. The point of the rear means can have a geometry similar to the point of the front means. The rear point can be formed in such a way that it only breaks the soil without mixing it with superjacent layers of soil. The rear point can be formed in order to, in an optimal way, provide draining of the soil. Both the rear and the front means including their points can be invertible. The front and rear means can be formed from different materials in order to optimize the service life of these wear parts. In contrast to the front means, the rear means does not have to be soil seeking. This rear so-called tandem means can be mounted on all cultivator means holders of a cultivator. Said rear cultivator means can be mounted on some of the holders of the cultivator, e.g. the rear row, while the other holders have a common means. This tandem means can also be mounted on some of the holders of the cultivator, while the other holders are not working, e.g., by the same having been raised or dismounted.

More specifically, the invention relates to a holder for a cultivator means of an agricultural machinery, the lower end of which holder is provided with a screw joint in a first seat for the mounting of the cultivator means. The holder is furthermore provided with a second seat on the opposite side of the holder in relation to the first seat, to which second seat there is connected a second cultivator means. The second cultivator means has the same working direction as the first cultivator means and is formed and mounted in the second seat in order to be effective at a greater working depth than the first cultivator means.

In one embodiment of the invention, the first seat of the holder and the second seat of the holder are situated right opposite each other on opposite sides of the holder. In this embodiment, the first and second cultivator means are connected to the same screw joint. This simplifies and decreases the time for maintenance of the cultivator means.

In one embodiment of the invention, the holder is pivotally suspended in a frame of the agricultural machinery for turning movement of the two cultivator means between a working position and a raised position.

In one embodiment of the invention, the holder is provided with a shock-absorbing device mounted between the holder and the frame. This shock-absorbing device serves the purpose of decreasing damage to the cultivation means if these strike harder soil substances and stones.

In one embodiment of the invention, the shock-absorbing device comprises a hydraulic cylinder and/or a spring and/or a shear pin.

The invention furthermore relates to a cultivator means provided with an attachment for the connection to a seat in a holder via a screw joint. The cultivator means is provided with a cultivator body having an extension from said attachment. The cultivator means is furthermore provided with at least one share connected to the end of said cultivator body, the attachment of the cultivator means being formed to be connected to the back side of the holder on the front side of which a first cultivator means is connected to a seat in the holder so that the rear cultivator means assumes a greater working depth than the first cultivator means in the working position of the holder.

In one embodiment of the invention, the first cultivator means and the second cultivator means are connected to seats that are placed opposite each other on the holder by one and the same screw joint. This facilitates mounting and dismounting of the front and the rear means upon replacement or service.

In one embodiment of the invention, the share of the means is detachably mounted to the lower end of the cultivator body. In such a way, separate shares can be replaced after possible damage and not the entire means.

In one embodiment of the invention, the means is provided with two shares oriented 180° to each other in relation to the attachment of the means, the means being invertibly mounted in the attachment for the activation of the oppositely oriented share.

The invention relates furthermore to an agricultural machinery arranged to be towed across a ground surface by a traction vehicle, which agricultural machinery comprises a support frame provided with holders that are articulately mounted in the frame and provided with a first and a second cultivator means. The cultivator means are placed at the lower end of the holder so that the first cultivator means is connected to the front side of the holder by means of a screw joint and that a second cultivator means is mounted behind the first cultivator means in a screw joint. In a working position, thereby, the first cultivator means is effective at a first working depth and the second cultivator means effective at another deeper working depth when the holder is lowered.

Furthermore, the invention relates to an agricultural machinery having a holder made according to any one of the above-mentioned designs.

In addition, the invention relates to an agricultural machinery provided with a second cultivator means made according to any one of the above-mentioned designs.

### Brief Description of the Drawings

Now, the invention will be described in more detail, reference being made in connection with the accompanying drawing figures. The drawing figures show only explanatory sketches intended to facilitate the understanding of the invention.
- Figure 1: shows a perspective view of a part of an agricultural machinery according to the invention.
- Figure 2: shows a side view of a part of an agricultural machinery according to the invention.
- Figure 3: shows a side view of a holder according to the invention having a mounted cultivator means of conventional type.
- Figure 4a: shows a side view of a holder according to the invention having a mounted first cultivator means of conventional type as well as having a second cultivator means according to a first embodiment of the invention.
- Figure 4b: shows a side view of the first embodiment of the second cultivator means.
- Figure 4c: shows a front view of the first embodiment of the second cultivator means.
- Figure 5: shows a side view of the holder according to the invention having a mounted first cultivator means of the so-called Low Disturbance type as well as having a second cultivator means according to the first embodiment of the invention.
- Figure 6a: shows a side view of a second embodiment of the second cultivator means.
- Figure 6b: shows a front view of the second embodiment of the second cultivator means.
- Figure 7: shows a side view of the holder according to the invention having a mounted first cultivator means of the so-called Low Disturbance type as well as having a second cultivator means according to a third embodiment of the invention.
- Figure 8: shows a side view of the holder according to the invention having a mounted second cultivator means according to a fourth embodiment.

### Description of the Invention

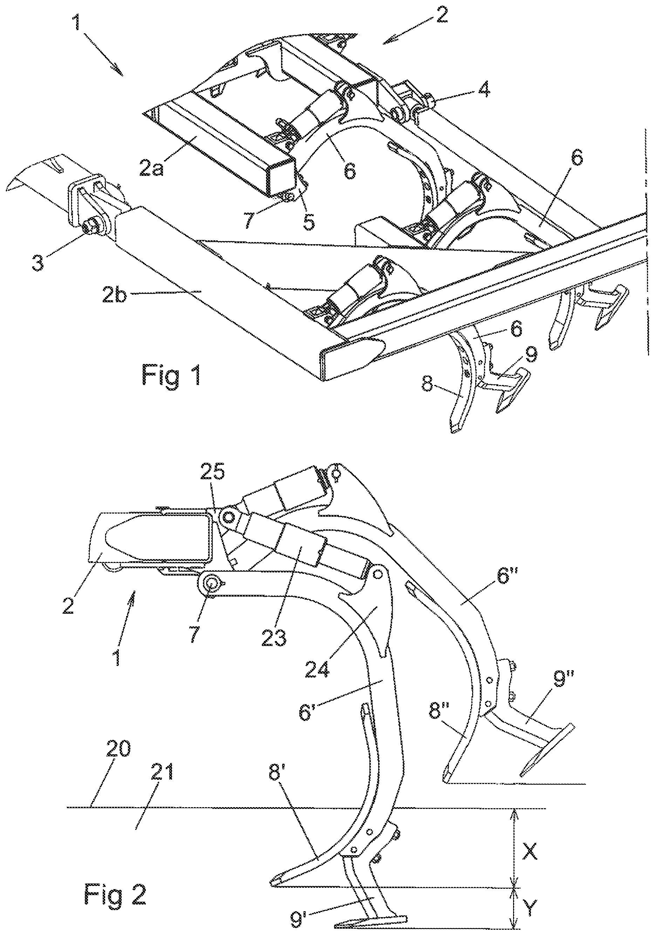

Figure 1 shows a part of an agricultural machinery 1 of cultivator type comprising a frame 2 having first and second frame parts 2a, 2b, which second frame parts 2b are raiseable around pivot shafts 3, 4 in relation to the first frame part 2a for transportation. On the frame parts 2a, 2b, holder attachments 5, often called tine attachments, are attached, in which holders 6, often called tines, are turnably mounted around a respective holder shaft 7. The figure shows the holders 6 in a stroke-released, raised position, which means an inactive position of the front and rear cultivator means 8, 9 mounted on the lower ends of the holders. At a working depth adjustment of the cultivator means, the entire frame 2 is lifted/brought down, all cultivator means of the non-stroke-released holders being brought to a suitable working level in relation to the ground surface. Thus, the working depth adjustment of the cultivator means is carried out by raising/bringing down of the entire frame 2.

Figure 2 shows an explanatory sketch from the side of a part of the agricultural machinery 1 with the frame 2 thereof in a lowered position wherein one of the holders 6' thereof for the cultivator means 8', 9' is shown in an active non-stroke-released position for the cultivation of the soil layer 21 of a ground surface 20 by the first front cultivator means 8 thereof processing the soil layer down to a first working depth X of, e.g., 25 cm, while the second rear cultivator means 9' thereof processes the soil layer 21 down to a further working depth Y of, e.g., 10 cm, i.e., processing of the soil layer is carried out down to a total depth of approx. 35 cm. The figure also shows a second holder 6" with the cultivator means 8, 9 thereof in a stroke-released position. The stroke release of the holder is carried out by rotation around the holder shaft 7 placed on the frame 2. For the stroke release of the holder 6', and thereby minimization of damage caused by hard soil fractions, stones or ground-steady obstacles, a shock-absorbing device 23 comprising a hydraulic cylinder is mounted between a holder attachment 24 on the holder and a frame attachment 25 on the frame 2 in the embodiment illustrated. Alternative embodiments of this shock-absorbing device 23 may comprise a damping hydraulic cylinder and/or a spring and/or a shear pin. As is seen in the figure, upon a stroke release, the holder 6" is turned up to a level where the front cultivator means 8" clears from the ground surface 20 and where the rear cultivator means 9" is turned-up to a level that is higher than the level of the front means. Simultaneously, this up-turning of the holder is sufficiently small, approx. maximally 40°, so that the holder should not hit the frame 2 of the agricultural machinery 1, as is seen in Figure 1.

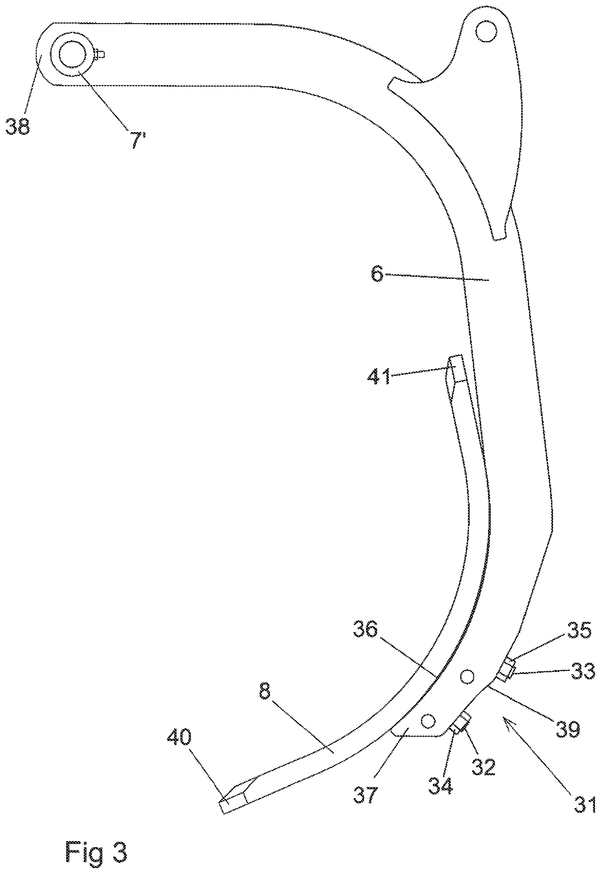

Figure 3 shows a holder 6 provided with a screw joint 31 having two through screws 32, 33 secured by each a nut 34, 35. The front cultivator means 8 is mounted in a first seat 36 situated at the lower end 37 of the holder 6, which is opposite the upper end 38 thereof at which the bearing 7' of the holder shaft is situated. On the opposite side of the holder, there is a second seat 39 for the mounting of a second rear cultivator means having the same direction of action as the front cultivator means 8. Said second seat 39 is situated on the other side of the holder, either opposite or above the first seat 36, for the mounting of the rear cultivator means. The screw joint 31 is shown as a screw/nut joint but may also be screws threaded directly into the material of the holder. In the figure, the cultivator means 8 is formed as a means invertible in the seat and provided with two points 40, 41, only the lower 40 one of which is active.

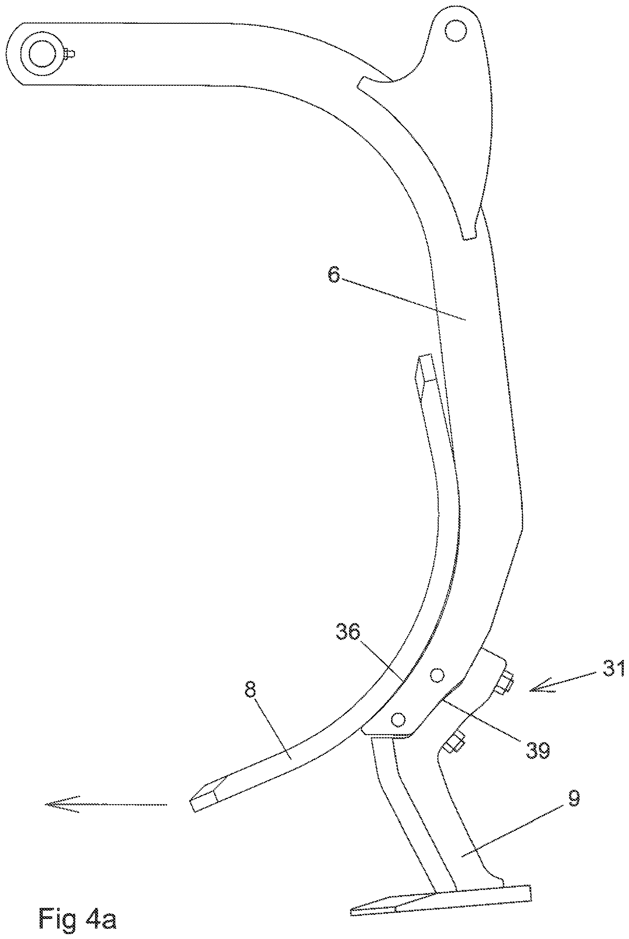

Figure 4a shows the holder 6 having a first front cultivator means 8 mounted according to Figure 3. In the figure, a second rear cultivator means 9 is also shown, which is mounted in the second seat 39, situated opposite the first seat 36 for the front cultivator means 8, in one and the same screw joint 31. The working direction of the cultivator means is indicated by the arrow in the figure.

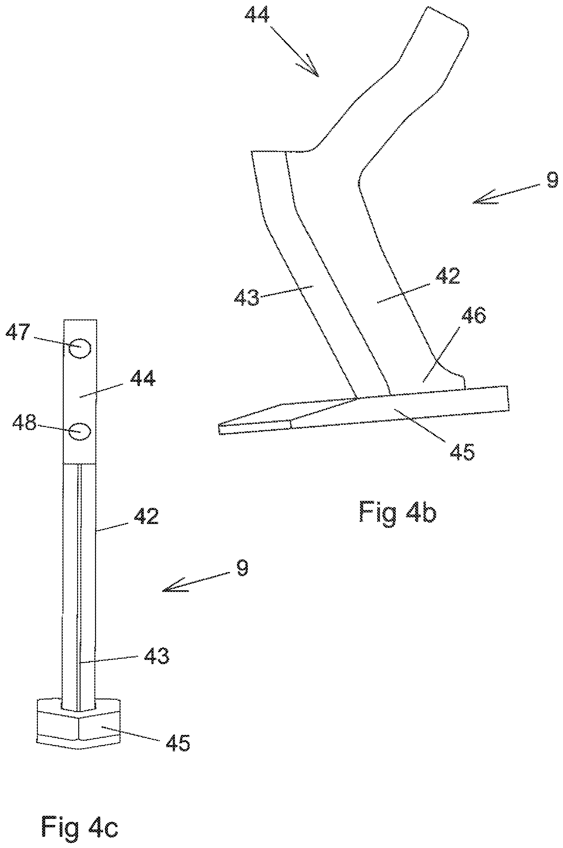

Figure 4b shows a first embodiment of the second cultivator means 9, which comprises a cultivator body 42, which on its front side is formed with a cultivation edge 43 that has a shape having the purpose of decreasing the soil flow and thereby decreasing the traction force demand. In the upper end thereof, the cultivator body 42 is furthermore provided with an attachment 44 that is formed to fit in the indicated second seat 39 in Figure 4a. Furthermore, at the lower end 46 thereof, the cultivator body is provided with a point 45 having a plane front profile, which point either may be fixedly connected to or be replaceably connected to the cultivator body by, e.g., a screw joint, not shown.

Figure 4c shows the second cultivator means 9 from the front, the slender and plane front profile of the point 45 being seen. The cultivation edge 43 is also shown on the cultivator body 42. The attachment 44 of the cultivator means 9 is provided with through holes 47, 48, through which holes, screws of the screw joint 31, according to Figure 4a, extend.

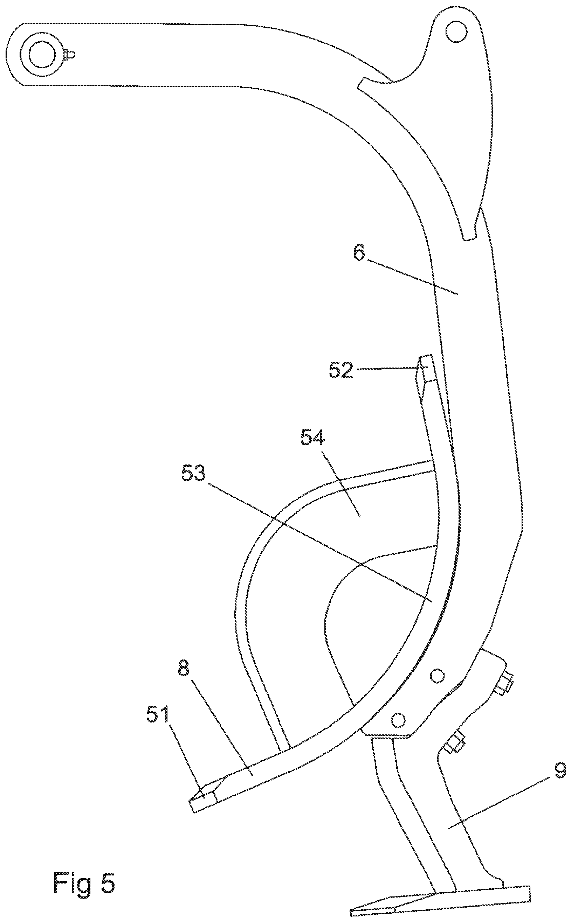

Figure 5 shows again the holder 6 having first and second cultivator means 8, 9 mounted. The figure shows the same configuring of holder and cultivator means as shown in Figure 4a but with the difference that the first cultivator means 8 is formed as an invertible so-called Low Disturbance means, which comprises a first point 51 as well as a second point 52, which are situated in each end of the concavely curved point body 53. The cultivator means 8 is in addition provided with a C-shaped front cutting edge 54 that has a shape having the purpose of decreasing the soil flow and thereby decreasing the traction force demand.

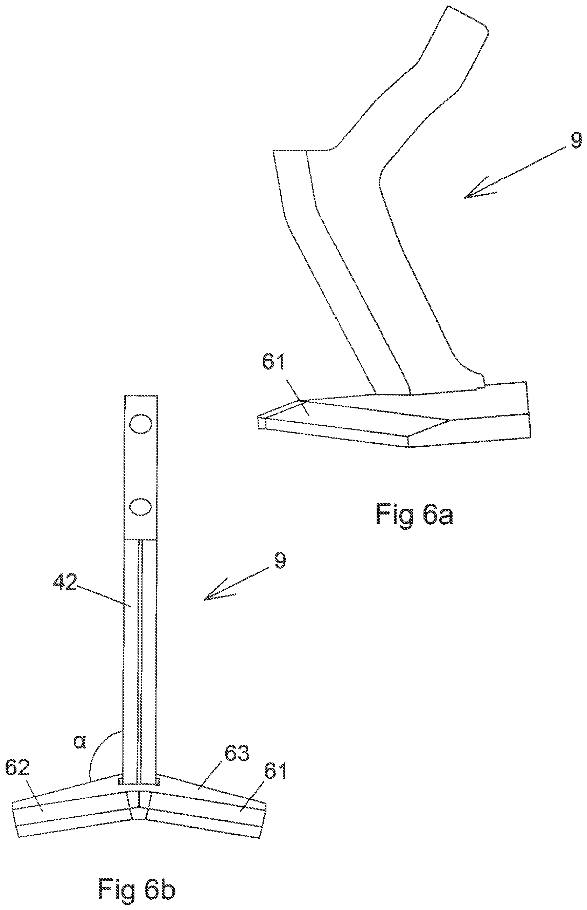

Figure 6a shows a side view of a second embodiment of the second cultivator means 9, which is adapted with a similar attachment 44 as shown in Figure 4b, in order to be connected to the holder. This cultivator means is, however, formed with a point 61 that is wider than in the previously shown second cultivator means, said point working to cut off rootlets within a wider furrow and at the similar greater depth as for previously shown second cultivator means.

Figure 6b shows a front view of this second embodiment of the cultivator means in Figure 6a. As is seen in the figure, the point 61 of the cultivator means 9 is formed with a considerably wider front profile than the previously shown second cultivator means in Figure 4c. In addition, the same cultivator means is formed with downwardly angled wings 62, 63 in order to increase the loosening of the soil across its wide working range. The angle α between the cultivator body 42 and each wing 62, 63 falls in the interval of 95°< α <120°, preferably 115°.

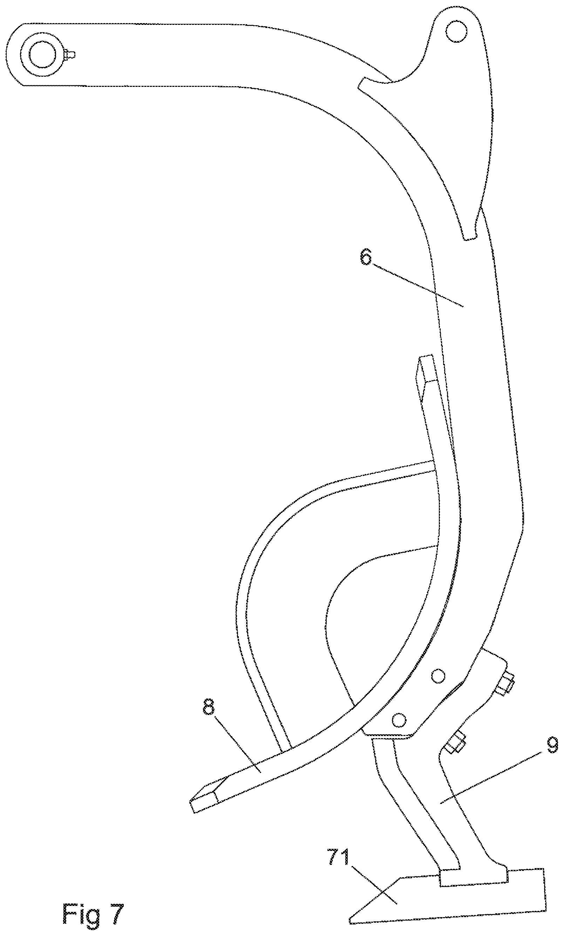

Figure 7 shows the holder 6 having a first cultivator means 8 mounted, such as an invertible Low Disturbance means according to Figure 5 but having a second cultivator means 9 according to a third embodiment mounted on the holder in the seat thereof, but wherein the point 71 of the cultivator means is formed with a principally circular cross-section.

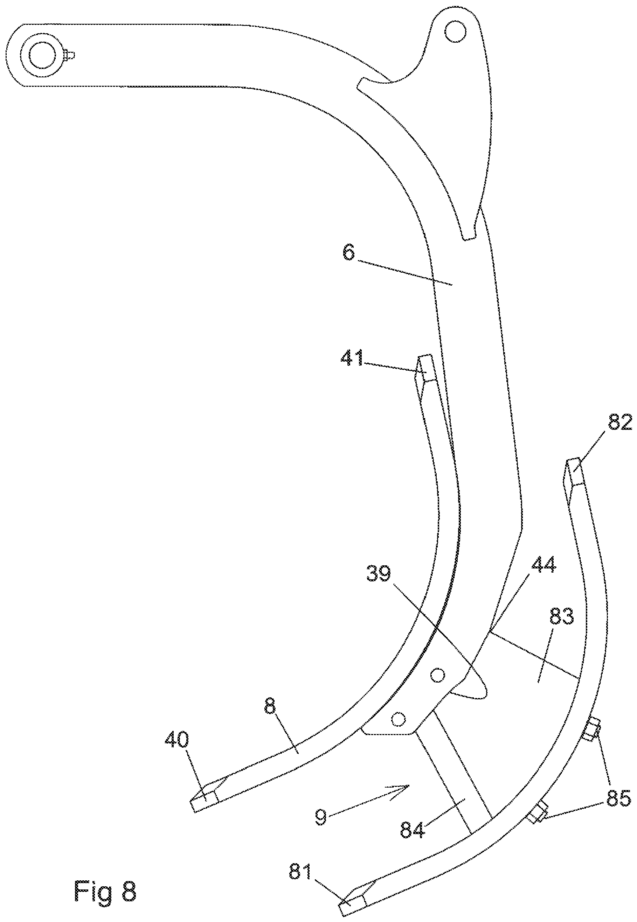

Figure 8 shows the same holder 6 as in previous embodiments but wherein the first cultivator means 8 is formed as an invertible means having double points in accordance with what has been shown in Figure 3. However, Figure 8 shows a second cultivator means 9 that is invertibly formed with two points 81, 82 having the same design as the points 40, 41 of the first cultivator means 8. The second cultivator means is furthermore provided with a cultivator body 83, which in one of its ends connects to the second seat 39 of the holder by its attachment 44 and in its other end is attached to the points 81, 82. The extension of the cultivator body diverges from the second seat toward the points. The cultivator body is furthermore provided with a cultivation edge 84 having the similar function as the one shown in Figure 4b. This second cultivation means 9 is connected to the holder 6 via a screw joint 85 in the corresponding way as shown in Figure 4a. However, the screws shown in the figure for fastening of are longer than what has previously been shown. Also the connection of the points to the cultivator body may be formed to be detachable by a screw joint.

The seats that are situated on the holder, and that have been described, comprise support surfaces for the cultivator means, in particular the front ones, so that these can be clamped free of play to the holder by the screw joint. In addition, the curvature of the cultivator means to said seats is somewhat flatter than the proper seats to provide said freedom of play upon tightening of the screw joint. The seats may also comprise guide surfaces for the cultivator means so that these are held in their respective vertical positions during operation.

## Claims

1. Holder (6) for a cultivator means (8) of an agricultural machinery (1), the lower end (37) of which holder (6) is provided with a screw joint (31) in a first seat (36) for the mounting of said cultivator means (8), that the holder (6) is provided with a second seat (39) on the opposite side of the holder (6) in relation to the first seat (36), to which second seat (39) there is connected a second cultivator means (9), and which second cultivator means (9) has the same working direction as the first cultivator means (8) and which second cultivator means (9) is formed and mounted in the second seat (39) in order to be effective at a greater working depth than the first cultivator means (8), the holder (6) together with the second cultivator means (9) are formed so that, upon turning up of the holder (6) approx. maximally 40°, the second cultivator means (9) is turned-up to a level that is higher than the level of the first cultivator means (8), **characterized in that** the first seat (36) and the second seat (39) are situated right opposite each other on opposite sides of the holder (6), and that the second cultivator means (9) is connected to the same screw joint (31) as the first cultivator means (8).

2. Holder according to claim 1, **characterized in that** the holder (6) is pivotally suspended in a frame (2) of the agricultural machinery (1) for turning movement between a working position and a raised position.

3. Holder according to claim 2, **characterized in that** a shock-absorbing device (23) is mounted between the holder (6) and the frame (2).

4. Holder according to claim 3, **characterized in that** the shock-absorbing device (23) comprises a hydraulic cylinder and/or a spring and/or a shear pin.

5. Cultivator means (9) provided with an attachment (44) for connection to a seat (39) via a screw joint (31, 85) in a holder (6) and provided with a cultivator body (42, 83) having an extension from said attachment (44) as well as provided with at least one share (45, 61, 71, 81, 82) connected to the end of said cultivator body (42, 83), the attachment (44) of the cultivator means (9) is formed to be connected to the back side of the holder (6) on the front side of which a first cultivator means (8) is connected to a seat (36) in the holder (6) so that the rear cultivator means (9) assumes a greater working depth than the first cultivator means (8) in the working position of the holder (6), **characterized in that** the first cultivator means (8) and the second cultivator means (9) are connected to seats (36, 39) placed opposite each other on the holder (6) by the same screw joint (31, 85).

6. Cultivator means according to claim 5, **characterized in that** the share (45, 61, 71, 81, 82) of the means is detachably mounted to the lower end (46) of the cultivator body.

7. Cultivator means according to any one of claims 5-6, **characterized in that** the means (9) is provided with two shares (81, 82) oriented 180° to each other in relation to the attachment (44), the means (9) being invertibly mounted in the attachment (44) for the activation of the oppositely oriented share.

8. Agricultural machinery (1) arranged to be towed across a ground surface (20) by a traction vehicle, which agricultural machinery (1) comprises a support frame (2) provided with holders (6) that are articulately mounted in the frame and provided with a first cultivator means (8) at the lower end thereof, which first cultivator means (8) is connected to the front side of the holder (6) by means of a screw joint so that the cultivator means (8), when the holder (6) is lowered, is effective in a working position at a first working depth (X), that a second cultivator means (9) is mounted in a screw joint behind the first cultivator means (8) so that the second cultivator means (9) in the working position assumes a further working depth (Y) in addition to the working depth of said first cultivator means (8), that the holder (6) together with the second cultivator means (9) are formed so that, upon turning up of the holder (6) approx. maximally 40° up to a level where the first cultivator means (8) clears from the support frame (2), the second cultivator means (9) is turned-up to a level that is higher than the level of the first cultivator means (8), **characterized in that** the two cultivator means (8, 9) are mounted by the same screw joint.

9. Agricultural machinery according to claim 8, **characterized in that** the holder (6) thereof is made according to any one of claims 1-4.

10. Agricultural machinery according to the claims 8-9, **characterized in that** the second cultivator means is made according to any one of claims 6-9.

## Patentansprüche

1. Halter (6) für ein Kultivierungsmittel (8) einer landwirtschaftlichen Maschine (1), wobei das untere Ende (37) des Halters (6) mit einer Schraubverbindung (31) in einer ersten Aufnahme (36) zum Montieren des Kultivierungsmittels (8) versehen ist, dass der Halter (6) mit einer zweiten Aufnahme (39) auf der bezogen auf die erste Aufnahme (36) gegenüberliegenden Seite des Halters (6) versehen ist, wobei mit der zweiten Aufnahme (39) ein zweites Kultivierungsmittel (9) verbunden ist und wobei das zweite Kultivierungsmittel (9) dieselbe Arbeitsrichtung wie das erste Kultivierungsmittel (8) hat und wobei das zweite Kultivierungsmittel (9) in der zweiten Aufnahme (39) ausgebildet und montiert ist, um bei einer größeren Arbeitstiefe als das erste Kultivierungsmittel (8) zu wirken, wobei der Halter (6) gemeinsam mit dem zweiten Kultivierungsmittel (9) derart ausgebildet ist, dass bei einem Aufwärtsdrehen des Halters (6) um näherungsweise 40° das zweite Kultivierungsmittel (9) bis zu einer Höhe aufwärts gedreht wird, die höher als die Höhe des ersten Kultivierungsmittels (8) ist, **dadurch gekennzeichnet, dass** die erste Aufnahme (36) und die zweite Aufnahme (39) auf einander gegenüberliegenden Seiten des Halters (6) einander genau gegenüberliegend positioniert sind und dass das zweite Kultivierungsmittel (9) mit derselben Schraubverbindung (31) wie das erste Kultivierungsmittel (8) verbunden ist.

2. Halter nach dem Anspruch 1, **dadurch gekennzeichnet, dass** der Halter (6) für eine Drehbewegung zwischen einer Arbeitsposition und einer erhöhten Position drehgelenkig in einem Rahmen (2) der landwirtschaftlichen Maschine (1) aufgehängt ist.

3. Halter nach dem Anspruch 2, **dadurch gekennzeichnet, dass** eine Stoßdämpfervorrichtung (23) zwischen dem Halter (6) und dem Rahmen (2) montiert ist.

4. Halter nach dem Anspruch 3, **dadurch gekennzeichnet, dass** die Stoßdämpfervorrichtung (23) einen Hydraulikzylinder und/oder eine Feder und/oder einen Scherstift umfasst.

5. Kultivierungsmittel (9), das mit einer Befestigung (44) zum Verbinden mit einer Aufnahme (39) mittels einer Schraubverbindung (31, 85) in einem Halter (6) versehen ist und das mit einem Kultivierungskörper (42, 83), der eine Erweiterung von der Befestigung (44) aufweist, versehen ist sowie mit wenigstens einer Pflugschar (45, 61, 71, 81, 82), die mit dem Ende des Kultivierungskörpers (42, 83) verbunden ist, versehen ist, wobei die Befestigung (44) des Kultivierungsmittels (9) ausgebildet ist, um mit der Rückseite des Halters (6), auf dessen Vorderseite ein erstes Kultivierungsmittel (8) mit einer Aufnahme (36) im Halter (6) verbunden ist, verbunden zu werden, so dass in der Arbeitsposition des Halters (6) das hintere Kultivierungsmittel (9) eine größere Arbeitstiefe als das erste Kultivierungsmittel (8) einnimmt, **dadurch gekennzeichnet, dass** das erste Kultivierungsmittel (8) und das zweite Kultivierungsmittel (9) mittels derselben Schraubverbindung (31, 85) mit Aufnahmen (36, 39) verbunden sind, die einander gegenüberliegend am Halter (6) positioniert sind.

6. Kultivierungsmittel nach dem Anspruch 5, **dadurch gekennzeichnet, dass** die Pflugschar (45, 61, 71, 81, 82) des Mittels abnehmbar am unteren Ende (46) des Kultivierungskörpers montiert ist.

7. Kultivierungsmittel nach einem beliebigen der Ansprüche 5 - 6, **dadurch gekennzeichnet, dass** das Mittel (9) mit zwei Pflugscharen (81, 82), die bezogen auf die Befestigung (44) in 180° zueinander ausgerichtet sind, versehen ist, wobei das Mittel (9) für die Aktivierung der entgegengesetzt ausgerichteten Pflugschar umkehrbar in der Befestigung (44) montiert ist.

8. Landwirtschaftliche Maschine (1), die ausgelegt ist, um von einem Zugfahrzeug über eine Bodenfläche (20) geschleppt zu werden, wobei die landwirtschaftliche Maschine (1) einen Stützrahmen (2) umfasst, der mit Haltern (6) versehen ist, die gelenkig im Rahmen montiert sind und an ihrem unteren Ende mit einem ersten Kultivierungsmittel (8) versehen sind, wobei das erste Kultivierungsmittel (8) mit der Vorderseite des Halters (6) mittels einer Schraubverbindung verbunden ist, so dass das Kultivierungsmittel (8) in einer Arbeitsposition mit einer ersten Arbeitstiefe (X) wirkt, wenn der Halter (6) abgesenkt wird, dass ein zweites Kultivierungsmittel (9) in einer Schraubverbindung hinter dem ersten Kultivierungsmittel (8) montiert ist, so dass das zweite Kultivierungsmittel (9) in der Arbeitsposition zusätzlich zur Arbeitstiefe des ersten Kultivierungsmittels (8) eine weitere Arbeitstiefe (Y) einnimmt, dass der Halter (6) gemeinsam mit dem zweiten Kultivierungsmittel (9) derart ausgebildet ist, dass bei einem Aufwärtsdrehen des Halters (6) um näherungsweise 40° bis zu einer Höhe, bei der das erste Kultivierungsmittel (8) den Stützrahmen (2) nicht mehr berührt, das zweite Kultivierungsmittel (9) bis zu einer Höhe aufwärts gedreht wird, die höher als die Höhe des ersten Kultivierungsmittels (8) ist, **dadurch gekennzeichnet, dass** die beiden Kultivierungsmittel (8, 9) mittels derselben Schraubverbindung montiert sind.

9. Landwirtschaftliche Maschine nach dem Anspruch 8, **dadurch gekennzeichnet, dass** deren Halter (6) nach einem beliebigen der Ansprüche 1 - 4 hergestellt ist.

10. Landwirtschaftliche Maschine nach den Ansprüchen 8 - 9, **dadurch gekennzeichnet, dass** das zweite Kultivierungsmittel nach einem beliebigen der Ansprüche 6 - 9 hergestellt ist.

## Revendications

1. Support (6) pour des moyens de cultivateur (8) d'une machine agricole (1), l'extrémité inférieure (37) duquel support (6) étant munie d'un assemblage par vissage (31) dans un premier siège (36) pour le montage dudit moyen de cultivateur (8), que le support (6) est équipé d'un second siège (39) sur le côté opposé du support (6) par rapport au premier siège (36), auquel second siège (39) est raccordé un second moyen de cultivateur (9), et lequel second moyen de cultivateur (9) a le même sens de travail que le premier moyen de cultivateur (8) et lequel second moyen de cultivateur (9) est constitué et monté dans le second siège (39) afin de bien fonctionner à une profondeur de travail supérieure à celle du premier moyen de cultivateur (8), le support (6) ainsi que le second moyen de cultivateur (9) sont constitués de sorte que, lorsqu'on remonte le support (6) d'à peu près 40° maximum, le second moyen de cultivateur (9) est remonté à un niveau qui est supérieur au niveau du premier moyen de cultivateur (8),
**caractérisé en ce que** le premier siège (36) et le second siège (39) sont situés exactement en face l'un de l'autre sur les côtés opposés du support (6), et **en ce que** le second moyen de cultivateur (9) est raccordé au même assemblage par vissage (31) que le premier moyen de cultivateur (8).

2. Support selon la revendication 1, **caractérisé en ce que** le support (6) est suspendu pivotant dans un cadre (2) de la machine agricole (1) pour mouvement de rotation entre une position de travail et une position soulevée.

3. Support selon la revendication 2, **caractérisé en ce qu'**un dispositif amortisseur de chocs (23) est monté entre le support (6) et le cadre (2).

4. Support selon la revendication 3, **caractérisé en ce que** le dispositif amortisseur de chocs (23) comprend un vérin hydraulique et/ou un ressort et/ou une goupille de cisaillement.

5. Moyen de cultivateur (9) pourvu d'une fixation (44) pour se raccorder à un siège (39) dans un support (6) par l'intermédiaire d'un assemblage par vissage (31, 85) et comprenant un corps (42, 83) de cultivateur comportant un prolongement depuis ladite fixation (44) et également équipé d'au moins un soc (45, 61, 71, 81, 82) raccordé à l'extrémité dudit corps (42, 83) de cultivateur, la fixation (44) du moyen de cultivateur (9) étant constituée pour être raccordée au côté arrière du support (6), sur le côté avant duquel un premier moyen de cultivateur (8) est raccordé à un siège (36) dans le support (6) de sorte que le moyen de cultivateur arrière (9) assure une plus grande profondeur de travail que le premier moyen de cultivateur (8) quand le support (6) est en position de travail, **caractérisé en ce que** le premier moyen de cultivateur (8) et le second moyen de cultivateur (9) sont raccordés par le même assemblage par vissage (31, 85) à des sièges (36, 39) placés en face l'un de l'autre sur le support (6).

6. Moyen de cultivateur selon la revendication 5, **caractérisé en ce que** le soc (45, 61, 71, 81, 82) du moyen est monté amovible sur l'extrémité inférieure (46) du corps du cultivateur.

7. Moyen de cultivateur selon la revendication 5 ou 6, **caractérisé en ce que** le moyen (9) est équipé de deux socs (81, 82) orientés à 180° l'un par rapport à l'autre par rapport à la fixation (44), le moyen (9) étant monté réversible dans la fixation (44) pour une activation du soc orienté à l'opposé.

8. Machine agricole (1) agencée pour être remorquée sur une surface (20) de sol par un véhicule tracteur, laquelle machine agricole (1) comprend un cadre porteur (2) pourvu de supports (6) qui sont montés articulés dans le cadre et équipés d'un premier moyen de cultivateur (8) à leur extrémité inférieure, lequel premier moyen de cultivateur (8) est raccordé au côté avant du support (6) au moyen d'un assemblage par vissage de sorte que le moyen de cultivateur (8), quand le support (6) est abaissé, est efficace en position de travail à une première profondeur (X) de travail, qu'un second moyen de cultivateur (9) est monté sur un assemblage par vissage derrière le premier moyen de cultivateur (8), de sorte que le second moyen de cultivateur (9) en position de travail assure une profondeur (Y) de travail supplémentaire en plus de la profondeur de travail dudit premier moyen de cultivateur (8), que le support (6) ainsi que le second moyen de cultivateur (9) sont constitués de sorte que, lorsqu'on remonte le support (6) d'à peu près 40 maximum jusqu'à un niveau où le premier moyen de cultivateur (8) se dégage du cadre porteur (2), le second moyen de cultivateur (9) est remonté à un niveau qui est supérieur au niveau du premier moyen de cultivateur (8), **caractérisé en ce que** les deux moyens de cultivateur (8, 9) sont montés par le même assemblage par vissage.

9. Machine agricole selon la revendication 8, **caractérisée en ce que** son support (6) est fabriqué selon l'une quelconque des revendications 1 à 4.

10. Machine agricole selon les revendications 8 et 9, **caractérisée en ce que** le second moyen de cultivateur est fabriqué selon l'une quelconque des revendications 6 à 9.
